(19) Europäisches Patentamt
European Patent Office
Office européen des brevets

(11) EP 4 455 186 B1

(12) EUROPEAN PATENT SPECIFICATION

(45) Date of publication and mention of the grant of the patent:
**22.10.2025 Bulletin 2025/43**

(21) Application number: **22911261.0**

(22) Date of filing: **21.12.2022**

(51) International Patent Classification (IPC):
***C08G 64/14*** *(2006.01)* ***C08G 64/20*** *(2006.01)*
***C08G 64/24*** *(2006.01)*

(52) Cooperative Patent Classification (CPC):
(C-Sets available)
**C08G 64/14; C08G 64/24** (Cont.)

(86) International application number:
**PCT/JP2022/047028**

(87) International publication number:
**WO 2023/120559 (29.06.2023 Gazette 2023/26)**

(54) **POLYCARBONATE RESIN, AND METHOD FOR PRODUCING SAME**

POLYCARBONATHARZ UND VERFAHREN ZUR HERSTELLUNG DAVON

RÉSINE DE POLYCARBONATE ET PROCÉDÉ DE PRODUCTION ASSOCIÉ

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **24.12.2021 JP 2021210945**

(43) Date of publication of application:
**30.10.2024 Bulletin 2024/44**

(73) Proprietor: **MITSUBISHI GAS CHEMICAL COMPANY, INC.**
**Chiyoda-ku**
**Tokyo 100-8324 (JP)**

(72) Inventor: **ISHIKAWA Shun**
**Kamisu-shi, Ibaraki 314-0102 (JP)**

(74) Representative: **Hoffmann Eitle**
**Patent- und Rechtsanwälte PartmbB**
**Arabellastraße 30**
**81925 München (DE)**

(56) References cited:
**JP-A- 2004 149 745**
**JP-A- 2004 331 688**
**JP-A- 2005 015 505**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**G02B 1/04, C08L 69/00**

## Description

### TECHNICAL FIELD

The present invention relates to a polycarbonate resin and a method for producing the same, and an optical lens containing the polycarbonate resin. More specifically, the present invention relates to a polycarbonate resin, which contains a structural unit having a specific bisphenol skeleton and has a specific end structure, and which has excellent optical characteristics, and a method for producing the same.

### BACKGROUND ART

As a material of optical lenses to be used in optical systems of various cameras such as cameras, film integrated type cameras and video cameras, an optical glass or an optical resin is used. Optical glasses are excellent in heat resistance, transparency, size stability, chemical resistance, etc., but have problems of high material costs, bad molding processability and low productivity.

Meanwhile, advantageously, optical lenses made of optical resins can be mass-produced by injection molding. As high refractive index materials for camera lenses, polycarbonate, polyester carbonate, polyester resins, etc. are used.

When using an optical resin as an optical lens, in addition to optical characteristics such as the refractive index and Abbe number, heat resistance, transparency, low water absorbability, chemical resistance, low birefringence, moist heat resistance, etc. are required. In particular, recently, optical lenses having a high refractive index have been desired, and various resins have been developed according to such needs (Patent Documents 1 to 5).

JP 2004-331688 A describes an optical member formed from a polycarbonate copolymer, wherein an aromatic hydroxy component consists of 50-95 mol% of 9,9-bis(4-hydroxy-3-methylphenyl)fluorene and 50-5 mol% of a specific aromatic dihydroxy compound.

JP 2004-149745 A describes an aromatic polycarbonate resin composition, comprising (A) an aromatic polycarbonate, which has a water absorption rate of 0.20% or less or glass-transition temperature of 150°C or more, and (B) a layered silicate having a cation exchange capacity of 50-200 meq/100 g, wherein the content of (B) the layered silicate is 0.1 to 50 parts by mass relative to 100 parts by mass of (A) the aromatic polycarbonate.

JP 2005-015505 A describes a high-refractive, heat-resistant aromatic polycarbonate composition, which is a polycarbonate copolymer consisting of an aromatic dihydroxy component and a carbonate precursor, and containing 9,9-bis(4-hydroxy-3-methylphenyl)fluorene as the aromatic dihydroxy component, obtained by mixing at least two aromatic polycarbonate copolymers having different contents of 9,9-bis(4-hydroxy-3-methylphenyl)fluorene.

However, since there is an increasing demand for various molding and processing methods and plastic optical lenses, polycarbonate resins having better molding processability and higher hardness have been desired.

### PRIOR ART DOCUMENTS

### PATENT DOCUMENTS

Patent Document 1: Japanese Laid-Open Patent Publication No. 2018-2893
Patent Document 2: Japanese Laid-Open Patent Publication No. 2018-2894
Patent Document 3: Japanese Laid-Open Patent Publication No. 2018-2895
Patent Document 4: Japanese Laid-Open Patent Publication No. 2018-59074
Patent Document 5: WO2017/078073

### SUMMARY OF THE INVENTION

### PROBLEMS TO BE SOLVED BY THE INVENTION

The present invention addresses the problem of providing a polycarbonate resin which has excellent optical characteristics, suitable flowability for molding and processing, and high hardness, and a method for producing the same.

### MEANS FOR SOLVING THE PROBLEMS

The present inventors diligently made researches in order to solve the problems and found that a polycarbonate resin which has excellent optical characteristics and also has excellent flowability and hardness can be obtained by

blending a diol compound having a specific structure and an end terminator in specific amounts and also found a method for producing the same, and thus the present invention was achieved.

Specifically, the present invention is defined in the appended claims and includes aspects described below. A polycarbonate resin containing a structural unit (A) derived from a monomer represented by formula (1) and a structural unit (B) derived from a monomer represented by formula (2), the polycarbonate resin having an end structure containing a structure derived from an end terminator represented by formula (Z-1), wherein:

the molar ratio (A:B) of the structural unit (A) to the structural unit (B) is 35:65 to 75:25; and
the number of moles "a" of the structural unit (A), the number of moles "b" of the structural unit (B) and the number of moles "z" of the end terminator represented by formula (Z-1) satisfy the relationship in expression (I):

$$20<2*(a+b)/z<45 \qquad (I)$$

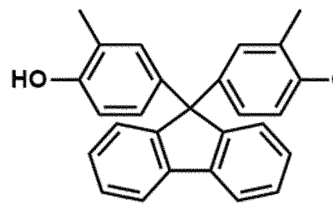

(1)

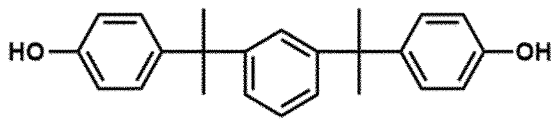

(2)

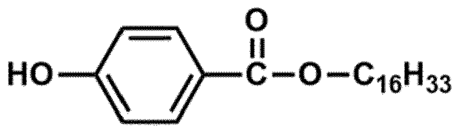

(Z-1)

In one embodiment, the polycarbonate resin has a terminal hydroxyl group concentration of 170 ppm or less.
In one embodiment, the polycarbonate resin has a molecular weight dispersion value (Mw/Mn) of 2.4 to 3.0.
In one embodiment, in the polycarbonate resin, the ratio of the part having a molecular weight (Mw) of less than 1000 in the polycarbonate resin is 0.70% by mass or less.
In one embodiment, the polycarbonate resin has a Q value (280°C, a load of 160 kg) of

$$10*10^{-2} \text{ ml/s to } 95*10^{-2} \text{ ml/s.}$$

In one embodiment, the polycarbonate resin has a refractive index (nD) of 1.600 to 1.630. The present invention further provides a method for producing the polycarbonate resin according to the present invention, wherein triethylbenzylammonium chloride is used as a phase transfer catalyst.

ADVANTAGEOUS EFFECT OF THE INVENTION

According to the present invention, it is possible to provide a polycarbonate resin which is excellent in optical characteristics such as a refractive index and is also excellent in hardness and a method for producing the same.

EMBODIMENTS FOR CARRYING OUT THE INVENTION

Hereinafter, the present invention will be described in detail by way of synthesis examples, working examples, etc.

<Polycarbonate Resin>

The polycarbonate resin of the present invention is a polycarbonate resin containing a structural unit (A) derived from a monomer represented by formula (1) and a structural unit (B) derived from a monomer represented by formula (2), the polycarbonate resin having an end structure containing a structure derived from an end terminator represented by formula (Z-1), wherein: the molar ratio (A:B) of the structural unit (A) to the structural unit (B) is 35:65 to 75:25; and the number of moles "a" of the structural unit (A), the number of moles "b" of the structural unit (B) and the number of moles "z" of the end terminator represented by formula (Z-1) satisfy the relationship in expression (I):

$$20<2*(a+b)/z<45 \qquad (I)$$

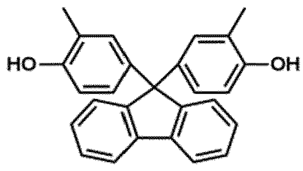

(1)

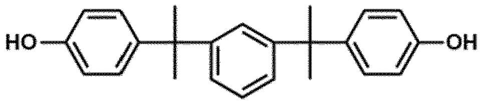

(2)

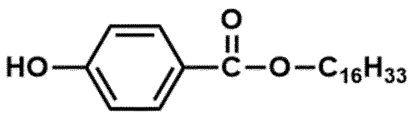

(Z-1)

In the present invention, the molar ratio (A:B) of the structural unit (A) to the structural unit (B) is 35:65 to 75:25, but is preferably 40:60 to 70:30, more preferably 55:45 to 65:35, and even more preferably 60:40 since outer appearance and hardness (number of scratches with a pencil hardness of H) of a cast film are favorable.

In the present invention, the number of moles "a" of the structural unit (A), the number of moles "b" of the structural unit (B) and the number of moles "z" of the end terminator represented by formula (Z-1) satisfy the relationship in expression (I) above, but preferably satisfy the relationship in expression (I-1):

$$25<2*(a+b)/z<45 \qquad (I\text{-}1)$$

More preferably, the value of 2*(a+b)/z is 30 to 40, even more preferably, the value of 2*(a+b)/z is 30 or 40, and most preferably, the value of 2*(a+b)/z is 30.

By satisfying the relationship in expression (I) above, a polycarbonate resin having a favorable terminal OH concentration and Tg is obtained and stable molding can be realized, and it can contribute to mass production.

In the present invention, the monomer represented by formula (1) is referred to as BCFL (biscresol fluorene), 9,9-bis(4-hydroxy-3-methylphenyl)fluorene or the like, and the monomer represented by formula (2) is referred to as BPM (1,3-bis[2-(4-hydroxyphenyl)-2-propyl]benzene) or the like and is also called bisphenol M. Further, the end terminator represented by formula (Z-1) is referred to as CEPB (hexadecyl-4-hydroxybenzoate), 4-hydroxybenzoic acid hexadecyl ester or the like. As each of these substances, either a commercially available product or a synthesized product may be used.

In the present invention, the terminal hydroxyl group concentration of the polycarbonate resin is preferably 170 ppm or less, more preferably 10 to 170 ppm, even more preferably 140 to 160 ppm, and most preferably 150 to 160 ppm since hydrolysis can be suppressed when used as a molded body. When a small amount of the terminal hydroxyl group is contained, the polycarbonate resin has increased adhesiveness, and the correlation with various coating materials and bonding materials may be increased.

In the present invention, the molecular weight dispersion value (Mw/Mn) of the polycarbonate resin is preferably 2.4 to 3.0, and more preferably 2.6 to 2.8 since stable forming can be realized.

In the present invention, the ratio of the part having a molecular weight (Mn) of less than 1000 in the polycarbonate resin is preferably 0.70% by mass or less, more preferably 0.1 to 0.7% by mass, even more preferably 0.40 to 0.7% by

mass, and most preferably 0.5 to 0.6% by mass since contamination of a mold for forming can be easily reduced. When a small amount of the part having a molecular weight (Mn) of less than 1000 is contained, the polycarbonate resin has increased plasticity, and the molding cycle may be shortened. In this regard, the molecular weight (Mn) means a polystyrene-equivalent number average molecular weight.

In a preferred embodiment of the present invention, the ratio of the sum of the structural units (A) and (B) in all the structural units in the polycarbonate resin is preferably 80 to 100 mol%, more preferably 90 to 100 mol%, and particularly preferably 100 mol%.

That is, the polycarbonate resin to be used in the present invention may contain, in addition to the structural units (A) and (B), a structural unit derived from an aliphatic dihydroxy compound and a structural unit derived from an aromatic dihydroxy compound, which are generally used as a structural unit of a polycarbonate resin or polyester carbonate resin, within a range in which the effects of the present invention are not reduced.

Specifically, examples of the aliphatic dihydroxy compound include various substances, and particularly include 1,4-cyclohexanedimethanol, tricyclodecanedimethanol, 1,3-adamantanedimethanol, 2,2-bis(4-hydroxycyclohexyl)-propane, 3,9-bis(2-hydroxy-1,1-dimethylethyl)-2,4,8,10-tetraoxaspiro[5.5]undecane, 2-(5-ethyl-5-hydroxymethyl-1,3-dioxan-2-yl)-2-methylpropan-1-ol, isosorbide, 1,3-propanediol, 1,4-butanediol, and 1,6-hexanediol.

Examples of the aromatic dihydroxy compound include various substances, and particularly include 2,2-bis(4-hydroxyphenyl)propane [bisphenol A], bis(4-hydroxyphenyl)methane, 1,1-bis(4-hydroxyphenyl)ethane, 2,2-bis(4-hydroxy-3,5-dimethylphenyl)propane, 4,4'-dihydroxydiphenyl, bis(4-hydroxyphenyl)cycloalkane, bis(4-hydroxyphenyl)oxide, bis(4-hydroxyphenyl)sulfide, bis(4-hydroxyphenyl)sulfone, bis(4-hydroxyphenyl)sulfoxide, bis(4-hydroxyphenyl)ketone, and bisphenoxyethanol fluorene.

In one embodiment of the present invention, the polycarbonate resin further containing a structural unit derived from at least one monomer selected from the group of monomers below is also preferred.

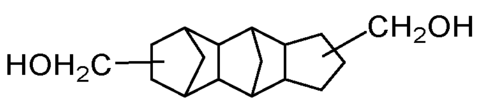
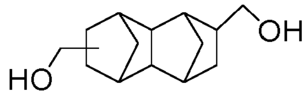
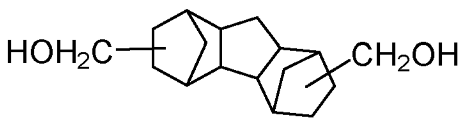
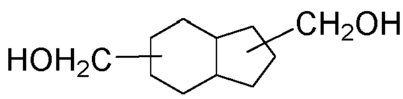
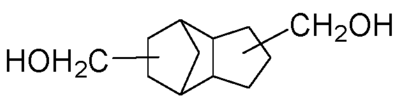
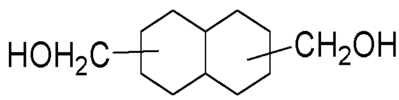
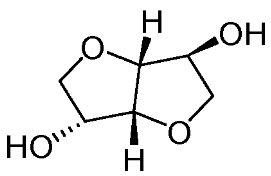
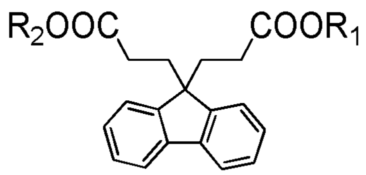
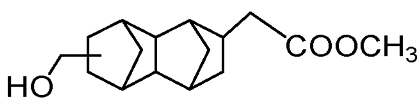
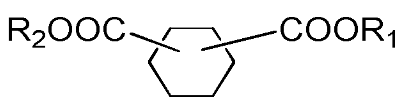
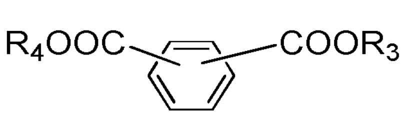
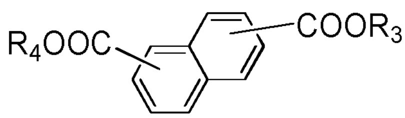

(In the formulae above, $R_1$ and $R_2$ each independently represent a hydrogen atom, a methyl group or an ethyl group, and $R_3$ and $R_4$ each independently represent a hydrogen atom, a methyl group, an ethyl group or an alkylene glycol having 2 to 5 carbon atoms.)

<Method for Producing Polycarbonate Resin>

In the phosgene method, usually, diol is reacted with phosgene in the presence of an acid binding agent and a solvent. As the acid binding agent, for example, pyridine, a hydroxide of an alkali metal such as sodium hydroxide and potassium hydroxide or the like is used. As the solvent, for example, methylene chloride, chloroform or the like is used. Moreover, for promoting a polycondensation reaction, a phase transfer catalyst such as a tertiary amine including triethylamine, a quaternary ammonium salt including triethylbenzylammonium chloride (TEBAC) or the like is preferably used, and TEBAC is more preferably used since the terminal OH concentration (terminal hydroxyl group concentration) can be reduced thereby. TEBAC is preferably added to the reaction system before phosgene is reacted. Furthermore, for adjusting the polymerization degree, CEPB (hexadecyl-4-hydroxybenzoate) is preferably added as a molecular weight control agent. Further, if desired, an antioxidant such as sodium sulfite and hydrosulfite and a branching agent such as phloroglucin and isatin bisphenol may be added in a small amount. The reaction temperature is usually 0 to 150°C, and preferably 5 to 40°C. The reaction time varies depending on the reaction temperature, but is usually 0.5 min to 10 hours, and preferably 1 min to 2 hours. Further, during the reaction, pH of the reaction system is desirably maintained at 10 or higher.

Moreover, to the polycarbonate resin of the present invention, an antioxidant, a processing stabilizer, a mold release agent, an ultraviolet absorber, a flowability improving agent, a crystal nucleating agent, a toughening agent, a dye, an antistatic agent, an antimicrobial agent or the like may be added according to need. In the present invention, an antioxidant and a mold release agent are preferably contained. In this specification, a polycarbonate composition obtained by adding additives like those described above to the polycarbonate resin of the present invention is also included in the "polycarbonate resin".

Examples of the antioxidant include triethylene glycol-bis[3-(3-tert-butyl-5-methyl-4-hydroxyphenyl)propionate], 1,6-hexanediol-bis[3-(3,5-di-tert-butyl-4-hydroxyphenyl)propionate], pentaerythritol-tetrakis[3-(3,5-di-tert-butyl-4-hydroxyphenyl)propionate], octadecyl-3-(3,5-di-tert-butyl-4-hydroxyphenyl)propionate, 1,3,5-trimethyl-2,4,6-tris(3,5-di-tert-butyl-4-hydroxybenzyl)benzene, N,N-hexamethylene bis(3,5-di-tert-butyl-4-hydroxy-hydrocinnamide), 3,5-di-tert-butyl-4-hydroxy-benzylphosphonate-diethyl ester, tris(3,5-di-tert-butyl-4-hydroxybenzyl) isocyanurate, 3,9-bis{1,1-dimethyl-2-[β-(3-tert-butyl-4-hydroxy-5-methylphenyl)propionyloxy]ethyl}-2,4,8,10-tetraoxaspiro(5,5)undecane, and 3,9-bis(2,6-di-tert-butyl-4-methylphenoxy)-2,4,8,10-tetraoxa-3,9-diphosphaspiro[5.5]undecane. Among them, pentaerythritol-tetrakis[3-(3,5-di-tert-butyl-4-hydroxyphenyl)propionate] and 3,9-bis(2,6-di-tert-butyl-4-methylphenoxy)-2,4,8,10-tetraoxa-3,9-diphosphaspiro[5.5]undecane are preferred. The content of the antioxidant in the polycarbonate resin is preferably 0.001 to 0.3 parts by mass, and more preferably 0.01 to 0.2 parts by mass relative to 100 parts by mass of the polycarbonate resin.

As the catalyst deactivator, specifically, esters such as butyl benzoate; aromatic sulfonic acids such as p-toluenesulfonic acid; aromatic sulfonic acid esters such as butyl p-toluenesulfonate and hexyl p-toluenesulfonate; phosphoric acids such as phosphorous acid, phosphoric acid and phosphonic acid; phosphorous acid esters such as triphenyl phosphite, monophenyl phosphite, diphenyl phosphite, diethyl phosphite, di-n-propyl phosphite, di-n-butyl phosphite, di-n-hexyl phosphite, dioctyl phosphite and monooctyl phosphite; phosphoric acid esters such as triphenyl phosphate, diphenyl phosphate, monophenyl phosphate, dibutyl phosphate, dioctyl phosphate and monooctyl phosphate; phosphonic acids such as diphenylphosphonic acid, dioctylphosphonic acid and dibutylphosphonic acid; phosphonic acid esters such as diethyl phenylphosphonate; phosphines such as triphenyl phosphine and bis(diphenylphosphino)ethane; boric acids such as boric acid and phenylboric acid; aromatic sulfonates such as dodecylbenzenesulfonic acid tetrabutylphosphonium salt; organic halides such as stearic acid chloride, benzoyl chloride and p-toluenesulfonic acid chloride; alkyl sulfates such as dimethyl sulfate; organic halides such as benzyl chloride; etc. are preferably used.

From the viewpoint of effects of the catalyst deactivator, stability against the resin, etc., dodecylbenzenesulfonic acid tetrabutylphosphonium salt is particularly preferred. The content of the catalyst deactivator in the polycarbonate resin is preferably 0.0001 to 0.3 parts by mass, more preferably 0.001 to 0.1 parts by mass, and particularly preferably 0.001 to 0.01 parts by mass relative to 100 parts by mass of the polycarbonate resin.

Kneading of the catalyst deactivator may be carried out immediately after the polymerization reaction is completed, or may be carried out after the resin after the polymerization is pelletized. Further, in addition to the catalyst deactivator, other additives may also be added in a similar manner.

Examples of the processing stabilizer include a phosphorus-based processing heat stabilizer and a sulfur-based processing heat stabilizer. Examples of the phosphorus-based processing heat stabilizer include phosphorous acid, phosphoric acid, phosphonous acid, phosphonic acid, and esters thereof. Specific examples thereof include triphenyl phosphite, tris(nonylphenyl) phosphite, tris(2,4-di-tert-butylphenyl) phosphite, tris(2,6-di-tert-butylphenyl) phosphite, tridecyl phosphite, trioctyl phosphite, trioctadecyl phosphite, didecylmonophenyl phosphite, dioctylmonophenyl phosphite, diisopropylmonophenyl phosphite, monobutyldiphenyl phosphite, monodecyldiphenyl phosphite, monooctyldiphenyl phosphite, bis(2,6-di-tert-butyl-4-methylphenyl) pentaerythritol diphosphite, 2,2-methylenebis(4,6-di-tert-butylphenyl) octylphosphite, bis(nonylphenyl) pentaerythritol diphosphite, bis(2,4-dicumylphenyl) pentaerythritol diphosphite,

bis(2,4-di-tert-butylphenyl) pentaerythritol diphosphite, distearylpentaerythritol diphosphite, tributyl phosphate, triethyl phosphate, trimethyl phosphate, triphenyl phosphate, diphenyl monoorthoxenyl phosphate, dibutyl phosphate, dioctyl phosphate, diisopropyl phosphate, dimethyl benzenephosphonate, diethyl benzenephosphonate, dipropyl benzenephosphonate, tetrakis(2,4-di-t-butylphenyl)-4,4'-biphenylene diphosphonate, tetrakis(2,4-di-t-butylphenyl)-4,3'-biphenylene diphosphonate, tetrakis(2,4-di-t-butylphenyl)-3,3'-biphenylene diphosphonate, bis(2,4-di-tert-butylphenyl)-4-phenylphenylphosphonate, and bis(2,4-di-tert-butylphenyl)-3-phenyl-phenylphosphonate. The content of the phosphorus-based processing heat stabilizer in the polycarbonate resin is preferably 0.001 to 0.3 parts by mass, and more preferably 0.001 to 0.2 parts by mass relative to 100 parts by mass of the polycarbonate resin.

Examples of the sulfur-based processing heat stabilizer include pentaerythritol-tetrakis(3-lauryl thiopropionate), pentaerythritol-tetrakis(3-myristyl thiopropionate), pentaerythritol-tetrakis(3-stearyl thiopropionate), dilauryl-3,3'-thiodipropionate, dimyristyl-3,3'-thiodipropionate, and distearyl-3,3'-thiodipropionate. The content of the sulfur-based processing heat stabilizer in the polycarbonate resin is preferably 0.001 to 0.3 parts by mass, and more preferably 0.001 to 0.2 parts by mass relative to 100 parts by mass of the polycarbonate resin.

Regarding the mold release agent, it is preferred that 90% by mass or more of it is made of an ester of an alcohol and a fatty acid. Specific examples of the ester of an alcohol and a fatty acid include an ester of a monohydric alcohol and a fatty acid and a partial ester or whole ester of a polyhydric alcohol and a fatty acid. As the above-described ester of a monohydric alcohol and a fatty acid, an ester of a monohydric alcohol having 1 to 20 carbon atoms and a saturated fatty acid having 10 to 30 carbon atoms is preferred. Further, as the partial ester or whole ester of a polyhydric alcohol and a fatty acid, a partial ester or whole ester of a polyhydric alcohol having 1 to 25 carbon atoms and a saturated fatty acid having 10 to 30 carbon atoms is preferred.

Specific examples of the ester of a monohydric alcohol and a saturated fatty acid include stearyl stearate, palmityl palmitate, butyl stearate, methyl laurate, and isopropyl palmitate. Specific examples of the partial ester or whole ester of a polyhydric alcohol and a saturated fatty acid include whole esters or partial esters of monoglyceride stearate (glycerin monostearate), monoglyceride stearate, diglyceride stearate, triglyceride stearate, monosorbitate stearate, monoglyceride behenate, monoglyceride caprate, monoglyceride laurate, pentaerythritol monostearate, pentaerythritol tetrastearate, pentaerythritol tetrapelargonate, propylene glycol monostearate, biphenyl biphenate, sorbitan monostearate, 2-ethylhexyl stearate and dipentaerythritols such as dipentaerythritol hexastearate. Among them, monoglyceride stearate and monoglyceride laurate are particularly preferred. The content of these mold release agents is preferably 0.005 to 2.0 parts by mass, more preferably 0.01 to 0.6 parts by mass, and even more preferably 0.02 to 0.5 parts by mass relative to 100 parts by mass of the polycarbonate resin.

The ultraviolet absorber is preferably at least one ultraviolet absorber selected from the group consisting of a benzotriazole-based ultraviolet absorber, a benzophenone-based ultraviolet absorber, a triazine-based ultraviolet absorber, a cyclic iminoester-based ultraviolet absorber and a cyanoacrylate-based ultraviolet absorber. That is, ultraviolet absorbers mentioned below may be used solely, or two or more of them may be used in combination.

Examples of the benzotriazole-based ultraviolet absorber include 2-(2-hydroxy-5-methylphenyl)benzotriazole, 2-(2-hydroxy-5-tert-octylphenyl)benzotriazole, 2-(2-hydroxy-3,5-dicumylphenyl)phenylbenzotriazole, 2-(2-hydroxy-3-tert-butyl-5-methylphenyl)-5-chlorobenzotriazole, 2,2'-methylenebis[4-(1,1,3,3-tetramethylbutyl)-6-(2N-benzotriazol-2-yl)phenol], 2-(2-hydroxy-3,5-di-tert-butylphenyl)benzotriazole, 2-(2-hydroxy-3,5-di-tert-butylphenyl)-5-chlorobenzotriazole, 2-(2-hydroxy-3,5-di-tert-amylphenyl)benzotriazole, 2-(2-hydroxy-5-tert-octylphenyl)benzotriazole, 2-(2-hydroxy-5-tert-butylphenyl)benzotriazole, 2-(2-hydroxy-4-octoxyphenyl)benzotriazole, 2,2'-methylenebis(4-cumyl-6-benzotriazolephenyl), 2,2'-p-phenylenebis(1,3-benzoxazin-4-one), and 2-[2-hydroxy-3-(3,4,5,6-tetrahydrophthalimidomethyl)-5-methylphenyl]benzotriazole.

Examples of the benzophenone-based ultraviolet absorber include 2,4-dihydroxybenzophenone, 2-hydroxy-4-methoxybenzophenone, 2-hydroxy-4-octoxybenzophenone, 2-hydroxy-4-benzyloxybenzophenone, 2-hydroxy-4-methoxy-5-sulfoxybenzophenone, 2-hydroxy-4-methoxy-5-sulfoxytrihydrate benzophenone, 2,2'-dihydroxy-4-methoxybenzophenone, 2,2',4,4'-tetrahydroxybenzophenone, 2,2'-dihydroxy-4,4'-dimethoxybenzophenone, 2,2'-dihydroxy-4,4'-dimethoxy-5-sodiumsulfoxybenzophenone, bis(5-benzoyl-4-hydroxy-2-methoxyphenyl)methane, 2-hydroxy-4-n-dodecyloxybenzophonone, and 2-hydroxy-4-methoxy-2'-carboxybenzophenone.

Examples of the triazine-based ultraviolet absorber include 2-(4,6-diphenyl-1,3,5-triazin-2-yl)-5-[(hexyl)oxy]-phenol, 2-(4,6-bis(2,4-dimethylphenyl)-1,3,5-triazin-2-yl)-5-[(octyl)oxy]-phenol, and 2,4,6-tris(2-hydroxy-4-hexyloxy-3-methylphenyl)-1,3,5-triazine.

Examples of the cyclic iminoester-based ultraviolet absorber include 2,2'-bis(3,1-benzoxazin-4-one), 2,2'-p-phenylenebis(3,1-benzoxazin-4-one), 2,2'-m-phenylenebis(3,1-benzoxazin-4-one), 2,2'-(4,4'-diphenylene)bis(3,1-benzoxazin-4-one), 2,2'-(2,6-naphthalene)bis(3,1-benzoxazin-4-one), 2,2'-(1,5-naphthalene)bis(3,1-benzoxazin-4-one), 2,2'-(2-methyl-p-phenylene)bis(3,1-benzoxazin-4-one), 2,2'-(2-nitro-p-phenylene)bis(3,1-benzoxazin-4-one), and 2,2'-(2-chloro-p-phenylene)bis(3,1-benzoxazin-4-one).

Examples of the cyanoacrylate-based ultraviolet absorber include 1,3-bis-[(2'-cyano-3',3'-diphenylacryloyl)oxy]-2,2-bis[(2-cyano-3,3-diphenylacryloyl)oxy]methyl)propane and 1,3-bis-[(2-cyano-3,3-diphenylacryloyl)oxy]benzene.

The content of the ultraviolet absorber is preferably 0.01 to 3.0 parts by mass, more preferably 0.02 to 1.0 parts by mass, and even more preferably 0.05 to 0.8 parts by mass relative to 100 parts by mass of the polycarbonate resin. When the content is within these ranges, sufficient weatherability can be imparted to the polycarbonate resin according to intended use.

<Molded Body of Polycarbonate Resin and Method for Producing Same>

A molded body can be produced using the polycarbonate resin of the present invention. It is molded according to any method, for example, the injection molding method, compression molding method, extrusion molding method, solution casting method or the like. The polycarbonate resin of the present invention is excellent in moldability (good flowability), heat resistance (high glass transition temperature) and hardness (number of scratches with a pencil hardness of H), and therefore can be advantageously used particularly for optical lenses and optical films which require injection molding.

(Optical Lens)

An optical lens produced by using the polycarbonate resin of the present invention has a high refractive index and excellent hardness, and therefore can be used in the field in which expensive glass lenses having a high refractive index have been conventionally used including telescopes, binoculars and television projectors and is very useful. The optical lens is preferably used in the form of an aspherical lens according to need. In the case of the aspherical lens, since the spherical aberration can be adjusted to be substantially zero by one lens, it is not necessary to remove the spherical aberration by combining a plurality of spherical lenses, and reduction in weight and reduction in the production cost can be carried out. Accordingly, the aspherical lens is particularly useful as a camera lens among optical lenses.

Further, the optical lens is molded by any method such as the injection molding method, the compression molding method, and the injection compression molding method. According to the present invention, an aspherical lens having a high refractive index and low birefringence, which is technically difficult to obtain by processing a glass lens, can be more conveniently obtained.

In order to avoid mixing of a foreign material in the optical lens as much as possible, the molding environment must be a low-dust environment, and it is preferably Class 6 or lower, and more preferably Class 5 or lower.

(Optical Film)

An optical film produced by using the polycarbonate resin of the present invention has excellent transparency and heat resistance, and therefore is suitably used for a film for liquid crystal substrates, an optical memory card, etc.

In order to avoid mixing of a foreign material in the optical film as much as possible, the molding environment must be a low-dust environment, and it is preferably Class 6 or lower, and more preferably Class 5 or lower.

<Physical Properties of Polycarbonate Resin>

In the present invention, the Q value (280°C, a load of 160 kg) of the polycarbonate resin is preferably $10*10^{-2}$ ml/s to $95*10^{-2}$ ml/s, and more preferably $10*10^{-2}$ ml/s to $55*10^{-2}$ ml/s since good flowability at the time of molding and good handleability of resin are realized, and even more preferably $10*10^{-2}$ ml/s to $50*10^{-2}$ ml/s since particularly suitable flowability for molding and processing is realized.

In the present invention, the refractive index (nD) of the polycarbonate resin is preferably 1.600 to 1.630, more preferably 1.610 to 1.625, and even more preferably 1.617 to 1.621 since optical performance can be exerted.

In the present invention, the glass transition temperature (Tg) of the polycarbonate resin is preferably 145 to 165°C, and more preferably 148 to 160°C on the assumption of use of molded bodies in various environments.

In the present invention, it is preferred that the generation of a breakage or crack in a cast film of the polycarbonate resin is not found when the outer appearance thereof is visually observed. Further, regarding the cast film, the "number of scratches with a pencil hardness of H" is preferably "0". When the cast film is not broken or cracked and the "number of scratches with a pencil hardness of H" is "0", at the time of use for optical lenses for vehicles, camera lenses of smartphones and digital cameras, etc., advantages that lenses are not easily broken or cracked and that no scratch is caused by various impacts can be expected.

EXAMPLES

Hereinafter, the present invention will be specifically described by way of examples, but the present invention is

not limited thereto. Note that measurement values in the Examples were measured using the below-described methods and apparatuses.

1) Calculation of 2*(a+b)/z

The calculation was made using the amount of substance (mol) of BCFL (biscresol fluorene) as a, the amount of substance (mol) of BPM (1,3-bis[2-(4-hydroxyphenyl)-2-propyl]benzene) as b, and the amount of substance (mol) of the end terminator as z.

2) Ratio of the part having a molecular weight (Mn) of less than 1000

By means of gel permeation chromatography (GPC), the polystyrene equivalent molecular weight (Mn) of the polycarbonate resin was measured under the below-described conditions, and the content ratio (% by mass) of the part having a molecular weight (Mn) of less than 1,000 was calculated.

Measurement Conditions

Measurement apparatus: HLC-8320GPC manufactured by Tosoh Corporation
Columns: Shodex K-G+K-805Lx2+K-800D
Eluent: Chloroform
Temperature: Column constant temperature bath at 40°C
Flow rate: 1.0 ml/min
Concentration: 0.1 wt/vol%
Injection amount: 100 μl
Pretreatment: Filtration with 0.45 μm filter
Detector: Differential refractometer (RI)

Specifically, the log molecular weight was calculated using the below-described calibration curve formula (1) created by using standard polystyrene.

$$\text{log molecular weight} = s - 1.37T + 6.31 \times 10^{-2} \times T2 - 1.35 \times 10^{-3} \times T3 \qquad (1)$$

In the formula, T represents the elution time (min).

From a chromatogram with the molecular weight (Mn) (log molecular weight) on the horizontal axis and the elution ratio (dwt/d (log molecular weight)) on the vertical axis, the ratio between the area of the whole region of the chromatogram and the area of the part having a molecular weight (Mn) of less than 1000 was calculated using the below-described formula (3) to obtain the content ratio of the part having a molecular weight (Mn) of less than 1000.

Ratio of the part having a molecular weight (Mn) of less than 1000 in the polycarbonate resin (% by mass) =Area of the part having a molecular weight (Mn) of less than 1000/Area of the whole region of the chromatogram× 100 (3)

Standard polystyrene: EasiCal Type PS-1 Polystyrene manufactured by GL Sciences Inc.

3) Molecular weight distribution value (Mw/Mn)

By means of gel permeation chromatography (GPC), the polystyrene equivalent number average molecular weight (Mn) and weight average molecular weight (Mw) of the polycarbonate resin were measured under the conditions in 2) above, and the molecular weight dispersion value (Mw/Mn) was calculated.

4) Terminal hydroxyl group concentration (terminal OH concentration)

200 mg of the polycarbonate resin, 0.1 ml of acetic acid, and 0.17 g of titanium tetrachloride were dissolved in 20 ml of dichloromethane, the mixture was shaken for 2 minutes, and then the absorbance (Abs) at 546 nm was measured.

The terminal OH concentration (ppm) was calculated using the below-described calibration curve formula (4).

$$\text{Terminal OH concentration (ppm)}=0.1396\times Abs-0.0237/200 \qquad (4)$$

5) Q value

The polycarbonate resin was dried at 120°C for 4 hours, and then the measurement was performed in accordance with JIS-K7210, using the below-described apparatus and conditions.

Measurement apparatus: Flow tester CFT-500D manufactured by Shimadzu Corporation
Amount of sample: 2 g
Temperature: 280°C
Load: 160 kgf

6) Refractive index (nD)

The polycarbonate resin was dissolved in dichloromethane to prepare a 10% by mass solution of polycarbonate resin. 9.2 g of the prepared solution was weighed in a 150 ml New Desu Cup (New Disposable Cup) manufactured by Teraoka Corporation, and it was dried at room temperature for 24 hours and then at 120°C for 24 hours to prepare a test piece having a thickness of 0.5 mm. The measurement was performed using the below-described apparatus and wavelength.

Measurement apparatus: AbbematMW manufactured by AntonPaar
Measurement wavelength: 589.3 nm

7) Outer appearance of cast film

10 g of the polycarbonate resin was dissolved in 40 g of toluene, and a cast film was formed on a glass substrate using a coater (400 μm). The formed cast film was dried at 80°C for 10 hours and then at 120°C for 10 hours to remove the solvent. The obtained cast film on the glass substrate was judged by visual observation.

"∘" ... The generation of a breakage and/or crack was not found
"×" ... The generation of a breakage and/or crack was found

8) Hardness (number of scratches with a pencil hardness of H)

10 g of the polycarbonate resin was dissolved in 40 g of toluene, and a cast film was formed on a glass substrate using a coater (400 μm). The formed cast film was dried at 80°C for 10 hours and then at 120°C for 10 hours to remove the solvent. The obtained cast film on the glass substrate was tested five times using a pencil having a pencil hardness of H in accordance with JIS K 5600. The number of tests in which a scratch was made in the cast film was taken as the "number of scratches with a pencil hardness of H".

(Example 1)

To 500 ml of 9% by mass aqueous solution of sodium hydroxide, 62.1 g of biscresol fluorene (BCFL: manufactured by Honshu Chemical Industry Co., Ltd.), 37.9 g of bisphenol M (BPM: manufactured by Honshu Chemical Industry Co., Ltd.) and 0.1 g of triethylbenzylammonium chloride (TEBAC: manufactured by FUJIFILM Wako Pure Chemical Corporation) were added, and while stirring, the solution temperature was set to 20°C and 37.9 g of phosgene was injected thereinto over 30 minutes.

After the injection of phosgene was completed, 6.61 g of hexadecyl-4-hydroxybenzoate (CEPB) dissolved in 50 ml of dichloromethane was added thereto and the mixture was polymerized for 30 minutes.

The polymerization solution was separated into an aqueous layer and an organic layer, and the organic layer was neutralized with phosphoric acid and washed with pure water until the pH of the washing solution became 7.0, thereby obtaining polycarbonate resin powder. This polycarbonate resin powder was dried at 120°C for 24 hours to completely remove the solvent. The value of 2*(a+b)/z of the resin was 30. The thickness of the obtained cast film was 80 μ. The results are shown in Table 1.

(Examples 2 to 4, Comparative Examples 1 to 11)

The polymerization was performed in a manner similar to that in Example 1, except that, regarding BCFL, BPM, the end terminator and TEBAC, raw materials are as shown in Table 2. The results are shown in Table 1.

Table 1

| | BCFL (mol %) | BPM (mol %) | End terminator | Use of TEBAC | 2*(a+b)/z | Molecular weight dispersion value Mw/Mn | Ratio of part having molecular weight (Mn) of less than 1000 (%by mass) | Terminal OH (ppm) | Tg (°C) | Q value (*$10^{-2}$ml/s) | nD | Outer appearance of cast film | Number of scratches with pencil hardness of H |
|---|---|---|---|---|---|---|---|---|---|---|---|---|---|
| Example 1 | 60 | 40 | CEPB | Yes | 30 | 2.64 | 0.57 | 154 | 150 | 41.7 | 1.619 | ○ | 0 |
| Example 2 | 60 | 40 | CEPB | Yes | 40 | 2.73 | 0.53 | 154 | 158 | 14.6 | 1.619 | ○ | 0 |
| Example 3 | 70 | 30 | CEPB | Yes | 30 | 2.43 | 0.46 | 147 | 164 | 14.9 | 1.621 | ○ | 0 |
| Example 4 | 40 | 60 | CEPB | Yes | 40 | 2.96 | 0.67 | 138 | 132 | 79.1 | 1.606 | ○ | 0 |
| Comparative Example 1 | 60 | 40 | PTBP | Yes | 45 | 2.90 | 0.61 | 84 | 171 | 4.9 | 1.619 | ○ | 1 |
| Comparative Example 2 | 60 | 40 | CEPB | Yes | 45 | 3.04 | 0.64 | 106 | 161 | 9.9 | 1.619 | ○ | 0 |
| Comparative Example 3 | 60 | 40 | CEPB | Yes | 20 | 2.35 | 0.49 | 106 | 138 | 96.8 | 1.619 | × | 0 |
| Comparative Example 4 | 30 | 70 | CEPB | Yes | 30 | 2.73 | 0.76 | 102 | 111 | 102.5 | 1.605 | ○ | 5 |
| Comparative Example 5 | 80 | 20 | CEPB | Yes | 30 | 2.45 | 0.38 | 104 | 180 | 3.9 | 1.626 | × | 0 |
| Comparative Example 6 | 60 | 40 | CEPB | No | 30 | 2.65 | 0.87 | 179 | 152 | 58.5 | 1.619 | ○ | 0 |
| Comparative Example 7 | 60 | 40 | PTBP | No | 30 | 2.58 | 0.73 | 328 | 168 | 24.7 | 1.619 | ○ | 1 |
| Comparative Example 8 | 50 | 50 | PTBP | No | 45 | 2.73 | 0.46 | 326 | 159 | 17.5 | 1.614 | ○ | 1 |
| Comparative Example 9 | 60 | 40 | POOP | Yes | 30 | 2.76 | 0.71 | 163 | 160 | 30.0 | 1.619 | × | 2 |

(continued)

| | BCFL (mol %) | BPM (mol %) | End terminator | Use of TEBAC | 2*(a+b)/z | Molecular weight dispersion value Mw/Mn | Ratio of part having molecular weight (Mn) of less than 1000 (%by mass) | Terminal OH (ppm) | Tg (°C) | Q value ($*10^{-2}$ml/s) | nD | Outer appearance of cast film | Number of scratches with pencil hardness of H |
|---|---|---|---|---|---|---|---|---|---|---|---|---|---|
| Comparative Example 10 | 60 | 40 | POP | Yes | 30 | 2.67 | 0.73 | 183 | 165 | 22.9 | 1.619 | × | 2 |
| Comparative Example 11 | 60 | 40 | POBB | Yes | 30 | 2.86 | 0.75 | 143 | 161 | 21.4 | 1.619 | × | 5 |

Table 2

| | BCFL (g) | BPM (g) | BCFL (mol) | BPM (mol) | BCFL (mol %) | BPM (mol %) | End terminator | End terminator (g) | End terminator (mol) | 2*(a+b)/z | TEBAC (g) | TEBAC (mol) |
|---|---|---|---|---|---|---|---|---|---|---|---|---|
| Example 1 | 62.1 | 37.9 | 0.16 | 0.11 | 60 | 40 | CEPB | 6.61 | 0.0180 | 30 | 0.1 | 0.00044 |
| Example 2 | 62.1 | 37.9 | 0.16 | 0.11 | 60 | 40 | CEPB | 4.96 | 0.0136 | 40 | 0.1 | 0.00044 |
| Example 3 | 71.8 | 28.2 | 0.19 | 0.08 | 70 | 30 | CEPB | 6.56 | 0.0180 | 30 | 0.1 | 0.00044 |
| Example 4 | 42.1 | 57.9 | 0.11 | 0.17 | 40 | 60 | CEPB | 5.05 | 0.0140 | 40 | 0.1 | 0.00044 |
| Comparative Example 1 | 62.1 | 37.9 | 0.16 | 0.11 | 60 | 40 | PTBP | 1.83 | 0.0120 | 45 | 0.1 | 0.00044 |
| Comparative Example 2 | 62.1 | 37.9 | 0.16 | 0.11 | 60 | 40 | CEPB | 4.41 | 0.0120 | 45 | 0.1 | 0.00044 |
| Comparative Example 3 | 62.1 | 37.9 | 0.16 | 0.11 | 60 | 40 | CEPB | 9.92 | 0.0270 | 20 | 0.1 | 0.00044 |
| Comparative Example 4 | 31.9 | 68.1 | 0.08 | 0.20 | 30 | 70 | CEPB | 6.79 | 0.0187 | 30 | 0.1 | 0.00044 |
| Comparative Example 5 | 81.4 | 18.6 | 0.22 | 0.05 | 80 | 20 | CEPB | 6.50 | 0.0180 | 30 | 0.1 | 0.00044 |
| Comparative Example 6 | 62.1 | 37.9 | 0.16 | 0.11 | 60 | 40 | CEPB | 6.61 | 0.0180 | 30 | 0 | 0 |
| Comparative Example 7 | 62.1 | 37.9 | 0.16 | 0.11 | 60 | 40 | PTBP | 2.74 | 0.0180 | 30 | 0 | 0 |
| Comparative Example 8 | 52.2 | 47.8 | 0.14 | 0.14 | 50 | 50 | PTBP | 1.84 | 0.0123 | 45 | 0 | 0 |
| Comparative Example 9 | 62.1 | 37.9 | 0.16 | 0.11 | 60 | 40 | POOP | 4.06 | 0.0180 | 30 | 0.1 | 0.00044 |
| Comparative Example 10 | 62.1 | 37.9 | 0.16 | 0.11 | 60 | 40 | POP | 3.76 | 0.0180 | 30 | 0.1 | 0.00044 |
| Comparative Example 11 | 62.1 | 37.9 | 0.16 | 0.11 | 60 | 40 | POBB | 3.54 | 0.0180 | 30 | 0.1 | 0.00044 |

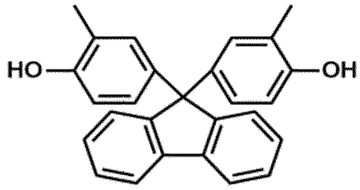
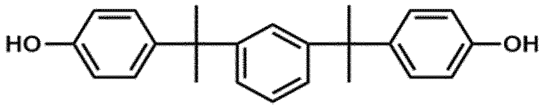

BCFL Formula (1)    BPM Formula (2)

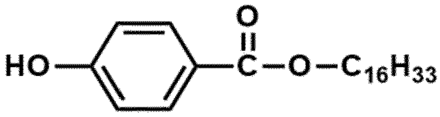
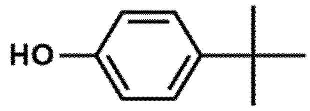

CEPB Formula (Z-1)    PTBP

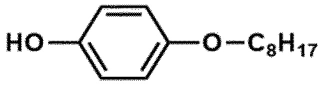
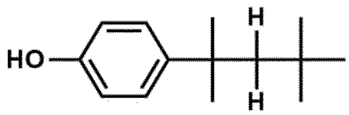
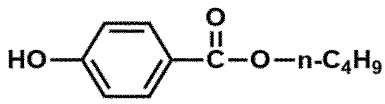

POOP    POP    POBB

## Claims

1. A polycarbonate resin comprising a structural unit (A) derived from a monomer represented by formula (1) and a structural unit (B) derived from a monomer represented by formula (2), the polycarbonate resin having an end structure containing a structure derived from an end terminator represented by formula (Z-1), wherein:

   a molar ratio (A:B) of the structural unit (A) to the structural unit (B) is 35:65 to 75:25; and
   a number of moles "a" of the structural unit (A), a number of moles "b" of the structural unit (B) and a number of moles "z" of the end terminator represented by formula (Z-1) satisfy the relationship in expression (I):

   $$20<2*(a+b)/z<45 \qquad (I)$$

   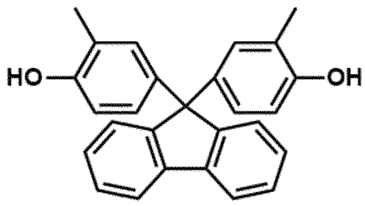
   (1)

   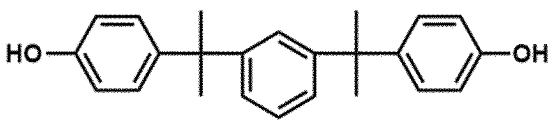
   (2)

   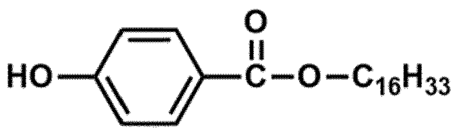
   (Z-1)

2. The polycarbonate resin according to claim 1, which has a terminal hydroxyl group concentration of 170 ppm or less, determined as specified in the description.

3. The polycarbonate resin according to claim 1 or 2, which has a molecular weight dispersion value (Mw/Mn) of 2.4 to 3.0, determined as specified in the description.

4. The polycarbonate resin according to any one of claims 1 to 3, wherein a ratio of a part having a molecular weight (Mn) of less than 1000 in the polycarbonate resin is 0.70% by mass or less, determined as specified in the description.

5. The polycarbonate resin according to any one of claims 1 to 4, which has a Q value (280°C, a load of 160 kg) of $10*10^{-2}$ ml/s to $95*10^{-2}$ ml/s, determined as specified in the description.

6. The polycarbonate resin according to any one of claims 1 to 5, which has a refractive index (nD) of 1.600 to 1.630, determined as specified in the description.

7. A method for producing the polycarbonate resin according to any one of claims 1 to 6, the method comprising using triethylbenzylammonium chloride as a phase transfer catalyst.

## Patentansprüche

1. Polycarbonatharz, umfassend eine Struktureinheit (A), die von einem Monomer der Formel (1) abgeleitet ist, und eine Struktureinheit (B), die von einem Monomer der Formel (2) abgeleitet ist, wobei das Polycarbonatharz eine Endstruktur aufweist, die eine Struktur enthält, die von einem Endterminator der Formel (Z-1) abgeleitet ist, wobei:

   das Molverhältnis (A:B) der Struktureinheit (A) zur Struktureinheit (B) 35:65 bis 75:25 beträgt; und
   die Molzahl "a" der Struktureinheit (A), die Molzahl "b" der Struktureinheit (B) und die Molzahl "z" des Endterminators der Formel (Z-1) die Beziehung in Gleichung (I) erfüllen:

$$20<2*(a+b)/z<45 \quad (I)$$

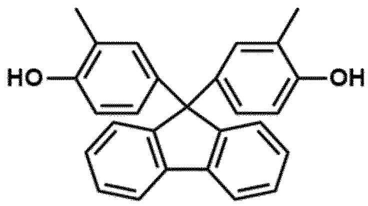

(1)

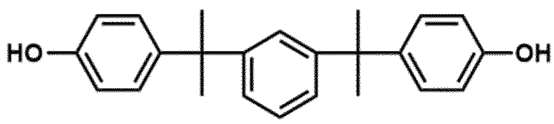

(2)

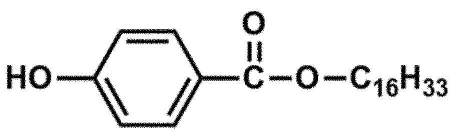

(Z-1)

2. Polycarbonatharz gemäß Anspruch 1, wobei eine endständige Hydroxylgruppen-Konzentration 170 ppm oder weniger beträgt, bestimmt wie in der Beschreibung angegeben.

3. Polycarbonatharz gemäß Anspruch 1 oder 2, das einen Molekulargewichtsdispersionswert (Mw/Mn) von 2,4 bis 3,0 aufweist, bestimmt wie in der Beschreibung angegeben.

4. Polycarbonatharz gemäß mindestens einem der Ansprüche 1 bis 3, wobei der Anteil eines Teils mit einem Molekulargewicht (Mn) von weniger als 1000 im Polycarbonatharz 0,70 Massenprozent oder weniger beträgt, bestimmt wie in der Beschreibung angegeben.

5. Polycarbonatharz gemäß mindestens einem der Ansprüche 1 bis 4, das einen Q-Wert (280 °C, eine Belastung von 160 kg) von $10*10^{-2}$ ml/s bis $95*10^{-2}$ ml/s aufweist, bestimmt wie in der Beschreibung angegeben.

6. Polycarbonatharz gemäß mindestens einem der Ansprüche 1 bis 5, das einen Brechungsindex (nD) von 1,600 bis 1,630 aufweist, bestimmt wie in der Beschreibung angegeben.

7. Verfahren zur Herstellung des Polycarbonatharzes gemäß mindestens einem der Ansprüche 1 bis 6, wobei das Verfahren die Verwendung von Triethylbenzylammoniumchlorid als Phasentransferkatalysator umfasst.

**Revendications**

1. Résine de polycarbonate comprenant un motif structural (A) dérivé d'un monomère représenté par la formule (1) et un motif structural (B) dérivé d'un monomère représenté par la formule (2), la résine de polycarbonate présentant une structure terminale contenant une structure dérivée d'un facteur de terminaison représenté par la formule (Z-1), dans laquelle :

   un rapport molaire (A:B) du motif structural (A) sur le motif structural (B) est compris de 35:65 à 75:25 ; et
   un nombre de moles "a" du motif structural (A), un nombre de moles "b" du motif structural (B) et un nombre de moles "z" du facteur de terminaison représenté par la formule (Z-1) satisfait à la relation dans l'expression (I) :

$$20<2*(a+b)/z<45 \qquad (I)$$

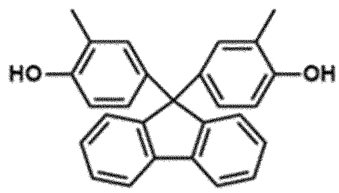

(1)

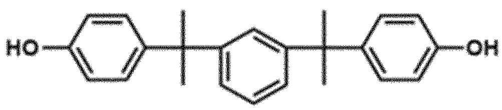

(2)

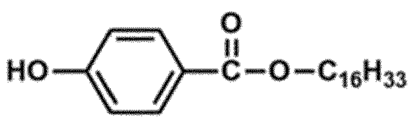

(Z-1)

2. Résine de polycarbonate selon la revendication 1, qui présente une concentration en groupe hydroxyle terminal inférieure ou égale à 170 ppm, déterminée comme spécifié dans la description.

3. Résine de polycarbonate selon la revendication 1 ou 2, qui présente une valeur de dispersion de poids moléculaire (Mw/Mn) comprise de 2,4 à 3,0, déterminée comme spécifié dans la description.

4. Résine de polycarbonate selon l'une quelconque des revendications 1 à 3, dans laquelle un rapport d'une partie présentant un poids moléculaire (Mn) inférieur à 1 000 dans la résine de polycarbonate est inférieur ou égal à 0,70 % en masse, déterminé comme spécifié dans la description.

5. Résine de polycarbonate selon l'une quelconque des revendications 1 à 4, qui présente une valeur Q (280 °C, une charge de 160 kg) comprise de $10*10^{-2}$ ml/s à $95*10^{-2}$ ml/s, déterminée comme spécifié dans la description.

6. Résine de polycarbonate selon l'une quelconque des revendications 1 à 5, qui présente un indice de réfraction (nD) compris de 1 600 à 1 630, déterminé comme spécifié dans la description.

**7.** Procédé de production de la résine de polycarbonate selon l'une quelconque des revendications 1 à 6, le procédé comprenant une utilisation de chlorure de triéthylbenzylammonium comme catalyseur de transfert de phase.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2004331688 A
- JP 2004149745 A
- JP 2005015505 A
- JP 2018002893 A
- JP 2018002894 A
- JP 2018002895 A
- JP 2018059074 A
- WO 2017078073 A